# EUROPEAN PATENT APPLICATION

(11) **EP 3 640 351 A1**
(43) Date of publication of application: **22.04.2020**
(21) Application number: 19191187.4
(22) Date of filing: 30.12.2011
(51) Int. Cl.: C21C 5/38, C21C 5/40, C22B 1/14, C22B 1/20, C22B 1/24, C22B 1/243, C22B 7/00, C22B 7/02, C22B 1/244

(54) **SYSTEMS AND METHODS FOR RECYCLING STEELMAKING CONVERTER EXHAUST RESIDUE AND PRODUCTS MADE THEREBY**

(30) Priority: 04.01.2011 US 98440911
(62) Divisional of application: 11815783.3
(71) Applicant: Hephaestus Metals Projetos e Equipamentos Ltda., Belo Horizonte Minas Gerais (BR)
(72) Inventor: GOMES;, Guilherme Santana Lopes, 31255-640 Minas Gerais (BR); DOS SANTOS;, Victor Loureiro, 31710-540 Minas Gerais (BR)
(74) Representative: Lloyd, Robin

(57) **Abstract**

Systems and methods for processing sludge from a fume scrubbing system that scrubs fumes from a steelmaking converter in a manner that separates/isolates a significant portion of the metallic iron particles in the sludge and prepares these particles for convenient handling. In an exemplary system, the system includes separating equipment that isolates metallic iron particles in the sludge and forming equipment that forms the isolated particles into briquettes that have relatively high mechanical resistance that allow the briquettes to maintain their integrity during handling and storage. The high-metallic-iron-content briquettes can be recycled in the steelmaking process, for example, as charging material for a basic oxygen converter or an electric arc furnace. Water used in the system can be recycled and reused within the system, thereby making the system environmentally friendly.

Systems and methods for making pellet feedstock and sinter feedstock for making pig iron, and feedstocks made thereby. Nonmetallic particulates are isolated from steelmaking converter exhaust fume residue and are incorporated into the pellet and/or sinter feedstocks. In one embodiment, the nonmetallic particulates are disaggregated from metallic particles in the residue using an acoustic cavitation duct. In one example of making pellet feedstock, the nonmetallic particulates are mixed with iron ore, limestone, coal, and bentonite to form a mixture that is pelletized into green pellets, which are then cooked to form the pellet feedstock. In one example of making sinter feedstock, the nonmetallic particulates are first micro-pelletized and then mixed with iron ore, limestone, and coal to form a mixture that is then cooked and crushed to form the sinter feedstock.

## Description

### FIELD OF THE INVENTION

The present invention generally relates to the field of steelmaking. In particular, the present invention is directed to systems and methods for recycling steelmaking converter exhaust residue and products made thereby.

### BACKGROUND

During the process of making steel, many residues are produced. Among these residues is residue from basic oxygen converters. In converter-based steelmaking, high-velocity oxygen is injected into a basic oxygen converter, which is typically charged with molten pig iron, scrap metals, lime, and iron ore, in order to remove carbon and silicon from the charge and to form molten steel. This process produces a large volume of hot fumes that contain fine particles of the charge materials and carbon monoxide gas. To avoid polluting the environment, the hot fumes are scrubbed before being discharged into the environment. Typically, the fumes are either quenched with water and cleaned of suspended metal particles and other solids or passed through an electrostatic precipitator to remove such particulate. The remaining gas (carbon monoxide) is drawn off and is often used as fuel in the steelmaking process. The solids and the quenching water from the quenching process form a sludge that is collected, typically in a settling tank. This residue sludge, which comprises metallic iron particles and other solids, is generally separated into "thick" and "thin" sludges.

The thick sludge contains the larger solids from the fumes and is usually either discarded into landfills or dried and used as sinter feed for blast furnaces that produces pig iron. The thin sludge contains the smaller solids from the fumes and is usually discarded into landfills or used directly "in natura" as sinter feed for blast furnaces or even directly "in natura" into pellet feed as a replacement for bentonite as a binder for producing the pellets. Both materials are sent to blast furnaces to become pig iron. Particulates, or dust, removed from the fumes by an electrostatic precipitator is similarly collected and is typically discarded into landfills without being separated into "thin" and "thick" constituents based on sizing of the particles it contains.

### BRIEF DESCRIPTION OF THE DRAWINGS

For the purpose of illustrating the invention, the drawings show aspects of one or more embodiments of the invention. However, it should be understood that the present invention is not limited to the precise arrangements and instrumentalities shown in the drawings, wherein:
FIG. 1 is a flow diagram illustrating a method of recycling sludge produced by a fume scrubbing system of a basic oxygen converter;
FIG. 2A is a schematic diagram of a continuous sludge processing system designed and configured to perform the method of FIG. 1;
FIG. 2B is a schematic diagram of a continuous sludge processing system designed a configured to process steelmaking converter fume residue having very fine particulates;
FIG. 3 is a flow diagram illustrating a specific example of a continuous-processing method of recycling basic oxygen converter sludge;
FIG. 4 is a photograph of dried thick converter sludge;
FIG. 5 is a photograph of dried particulate remnants of the thick converter sludge after cleaning, showing the remaining metallic iron particles and nonmetallic-iron particles;
FIG. 6 is a photograph of the metallic iron particles after processing the remnant solids of the slurry cleaning step to concentrate the metallic iron particles by separating them from the nonmetallic-iron particles;
FIG. 7 is a photograph of the nonmetallic-iron particles after processing the remnant solids of the slurry cleaning step to concentrate the metallic iron particles by separating them from the nonmetallic-iron particles;
FIG. 8 is a photograph of a set of briquettes consisting essentially of only metallic iron particles recovered from basic oxygen converter sludge;
FIG. 9 is a side elevational view of the acoustic cavitation device of the converter sludge processing system of FIG. 2;
FIG. 10 is an enlarged elevational perspective view of one segment of the acoustic cavitation duct of FIG. 9;
FIG. 11 is an enlarged view of one end of the acoustic cavitation duct segment of FIG. 10;
FIG. 12 is a flow diagram illustrating a method of making pellet feedstock from steelmaking converter fume residue;
FIG. 13 is a schematic diagram of a system for making pellet feedstock;
FIG. 14A is a diagram illustrating a pellet car containing conventional converter feedstock pellets;
FIG. 14B is a diagram of the pellet car of FIG. 14A completely filled with green pellets made using the method of FIG. 12 and the system of FIG. 13;
FIG. 15 is a flow diagram illustrating a method of making sinter feedstock from steelmaking converter fume residue; and
FIG. 16 is a schematic diagram of a system for making sinter feedstock.

### DETAILED DESCRIPTION

As described in the Background section above, a byproduct of steelmaking processes that utilizes basic oxygen converters, such as Linz-Donawitz (LD) converters, is a converter sludge that contains metallic iron particles and other solids, including nonmetallic-iron particles, such as the calcium oxide, silicon dioxide, aluminum trioxide, magnesium oxide, ferrous oxide, alkalis, and zinc. Conventionally, the larger solids in the converter sludge are isolated into a "thick converter sludge," and this thick sludge is either disposed of in landfills or used as sinter feed for making pig iron. Landfill disposal is undesirable for environmental reasons and because the metallic iron in the thick sludge is essentially wasted. In one example, the average metallic iron content of thick converter sludge is around 50%. When used as sinter feed for making pig iron, the thick converter sludge is mixed with iron ore fines and go normally through the conventional iron sintering process. When used as a briquette for direct blast furnace charge the thick converter sludge is dried, generally supplemented with binder and formed into briquettes that are then typically added to a blast furnace to make pig iron. While the metallic iron in the thick converter sludge is being recycled in this process, an undesirable result is that the large amount of the material in the sinter feed that are not metallic iron particles, such as alkalis, zinc, and the binder used to make the briquettes causes additional slag to form in the blast furnace.

Some aspects of the present invention are directed to processing converter sludge so that metallic iron particles contained in the sludge are efficiently recyclable without the drawbacks of conventional converter-sludge-based sinter feed. In one example, a very large portion of the metallic iron particles present in the converter sludge are separated from nonmetallic-iron components of the sludge and then formed into coherent bodies without any binder additives or other contaminants. The result is bodies that have high mechanical resistance and high metallic iron content (e.g., greater than 80%) that can be used as feed for a basic oxygen converter and/or electric arc furnaces, essentially as a replacement for scrap iron. Exemplary embodiments of these aspects are described below in the context of several specific examples.

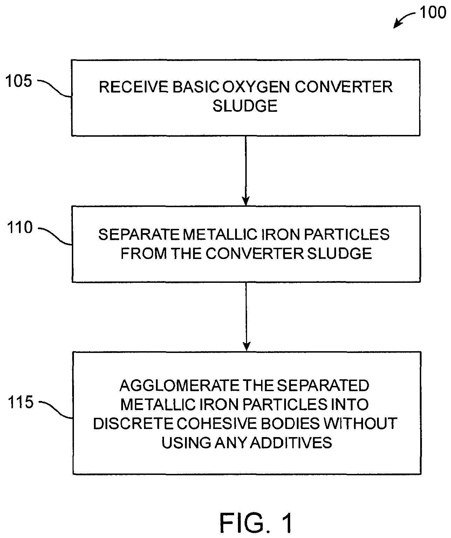

Referring now to the drawings, FIG. 1 illustrates a method 100 of agglomerating metallic iron particles, present in converter sludge, into coherent bodies consisting essentially of the metallic iron of the metallic iron particles in the sludge. Those skilled in the art will readily understand that this residue sludge is created in the process of scrubbing fumes from the basic oxygen-converting process to rid the gas in the fumes of the solids that are also present in the fumes, such as the metallic iron particles and nonmetallic-iron solids mentioned above.

As seen in FIG. 1, method 100 includes only a few high-level steps. However, those skilled in the art will readily appreciate that practical applications of method 100 using current technologies will typically include multiple sub-steps for effecting the higher-level steps of method 100. With that in mind, at step 105, a residue basic oxygen converter sludge is received from, for example, a fume scrubber, storage facility, or other place. At step 110, a substantial portion of the metallic iron particles within the sludge are separated from all of the non-magnetic-iron material within the sludge so that essentially all that remains is the metallic iron particles. Then, at step 115 the metallic iron particles are agglomerated with one another into discrete cohesive bodies, such as briquettes, that can be handled without substantially losing their integrity. Ideally, these cohesive bodies are created without binders or any other additives in order to keep the bodies as free from nonmetallic-iron material as practicable. As mentioned above, these cohesive bodies composed essentially only of pure metallic iron from the metallic iron particles in the converter sludge can be used for any suitable purpose, such as for charging a basic oxygen converter or electric arc furnace.

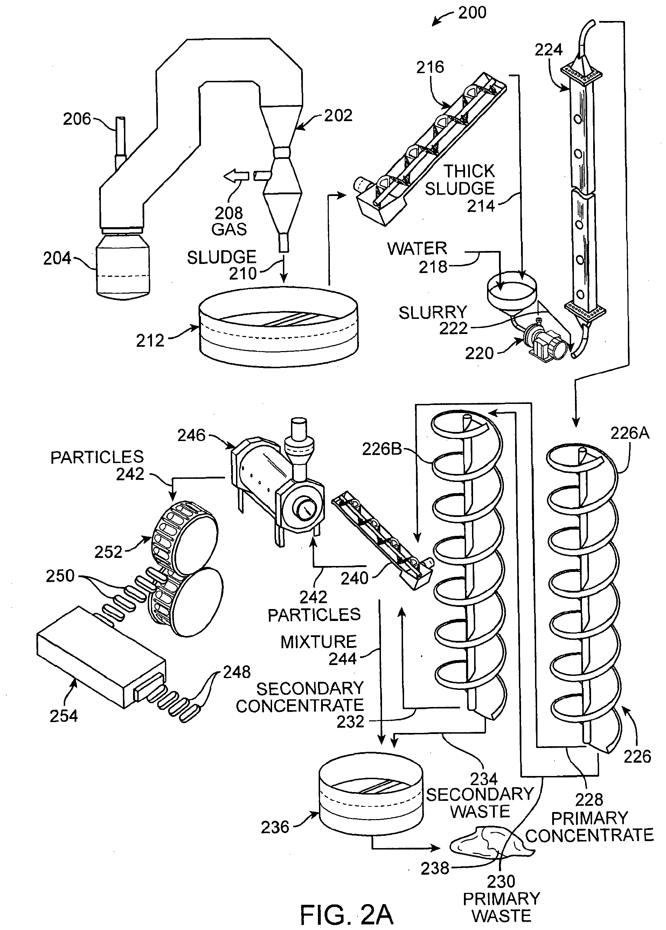

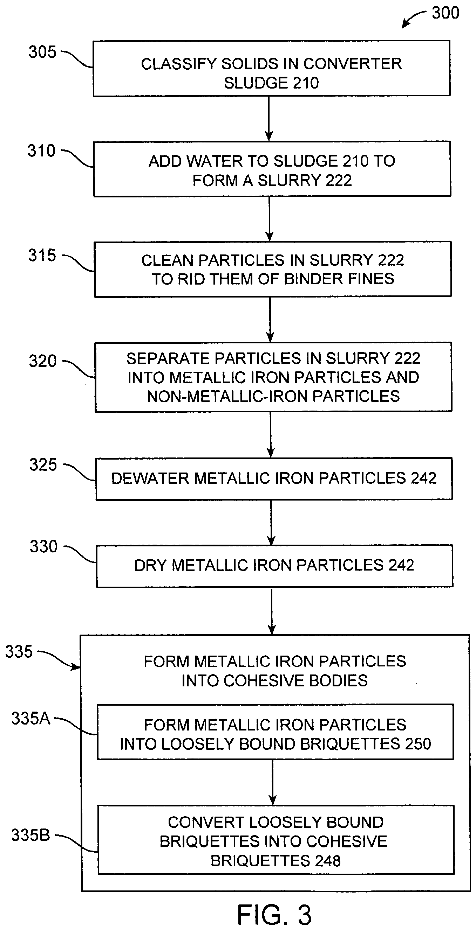

Referring now to FIGS. 2A and 3, these figures illustrate, respectively, a converter sludge processing system 200 and a corresponding method 300 of processing converter sludge using the system of FIG. 2A to form cohesive bodies composed essentially of the metallic iron of metallic iron particles originally in the sludge. For convenience of working with FIGS. 2A and 3, and occasionally other figures as well, it is noted that the first one or two digits of each element/step numeral used in this disclosure correspond to the number of the figure the reader should look at to see that element/step. For example, for elements having 200-series numerals the reader should look at FIG. 2A, and for steps having 300-series numerals, the reader should look at FIG. 3.

As seen in FIG. 2A, converter sludge processing system 200 in this example is located downstream of a fume scrubbing system 202 that scrubs fumes that emanate from an LD converter 204 during oxygen conversion of the charge (not shown) within the converter using a high-pressure-oxygen lance 206. As those skilled in the art understand, scrubbing system 202 cools the converter fumes and scrubs particulate matter from the fumes, typically by quenching the fumes with water (not shown). The products of such scrubbing are the gas 208 (largely carbon monoxide) originally contained in the fumes and converter sludge 210, which is a mixture of the particulate matter from the fumes with the quenching water. In this example, sludge 210 is captured in a settling tank 212.

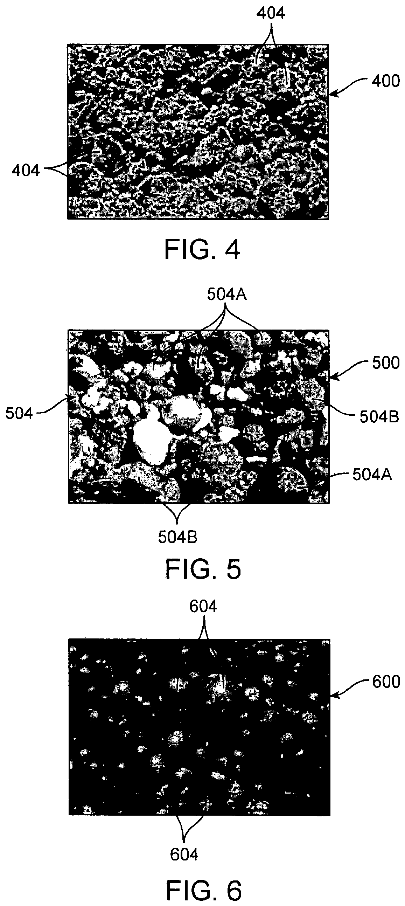

Referring to FIG. 3, and also to FIG. 2A for references to converter sludge processing system 200, at step 305 of method 300 converter sludge 210 is subjected to classification in which the sludge is separated into thick converter sludge 214 and thin converter sludge (not shown). In one example, thick converter sludge 214 is essentially composed of all of the solids in the sludge that are too large to pass through a 325-mesh sieve, i.e., have sizes greater than 44 microns. Of course, other minimum particle size cutoffs can be used as long as the desired metallic iron particles are not excluded from thick converter sludge 214. In the particular embodiment of system 200 shown, this classification is performed by an Atkins-type screw conveyor 216. However, those skilled in the art will understand that classification can be accomplished in any of a variety of ways, such as using one or more cyclones, one or more jig separators, etc. That said, Atkins-type screw conveyor 216 contributes to the continuous-flow processing nature of exemplary system 200 that is addressed in more detail below. FIG. 4 shows a sample 400 of thick converter sludge 214 that has been dried for clarity. FIG. 4 illustrates how the relatively large particles 404 in thick converter sludge 214, which include metallic iron particles (typically solid and hollow spheres) and nonmetallic-iron particles (such as calcium oxide and silicon dioxide particles), are covered with binder fines that adhere to these particles.

Referring again to FIGS. 2A and 3, at step 310 water 218 is added to thick converter sludge 214, here using a conditioner/slurry pump 220, to create a slurry 222 and pump the slurry to the next stage of system 200. In one example, water 218 is added to thick converter sludge 214 so that slurry 222 is about 30% solids. Generally, a suitable slurry will have a solids percentage in a range of about 20% to about 50%. In this embodiment, conditioner/slurry pump 220 is designed and configured to produce and pump slurry 222 having 30% solids (70% water) at a rate of 0.1 m³/min.

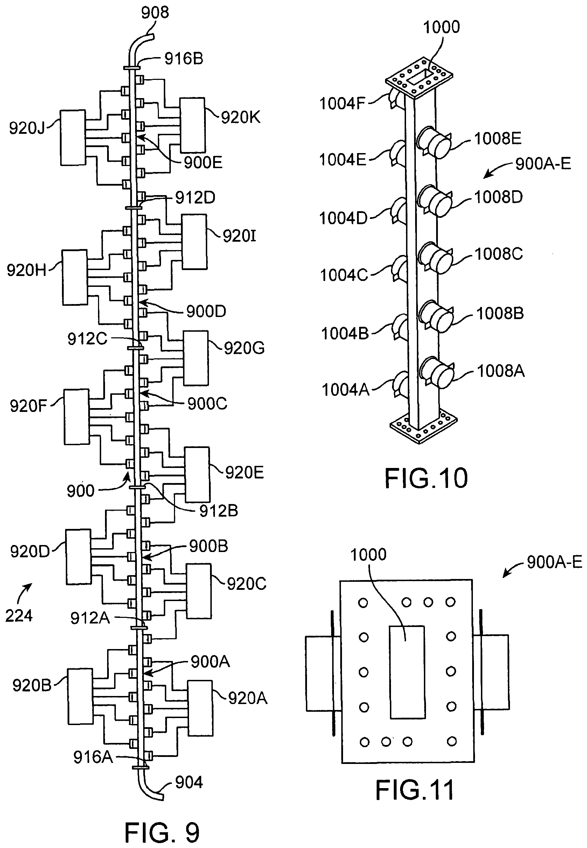

At step 315, the binder fines adhering to the larger particles in slurry 222 are removed from the particles. This step can be referred to as a "particle cleaning step" and can be achieved, for example, using acoustic cavitation. In the embodiment of converter sludge processing system 200 shown, particle cleaning step 315 is effected by a vertically oriented acoustic cavitation device 224 in which the particles are cleaned as slurry 222 flows upward through the device in a continuous stream. Further details of exemplary acoustic cavitation device 224 are described below in connection with FIGS. 9-11. In other embodiments, other cleaning devices can be used. FIG. 5 shows a dried sample 500 of the relatively large particles 504 from slurry 222 after particle cleaning step 315. FIG. 5 clearly shows how particle cleaning step 315 removes the binder fines that originally covered the particles in thick converter sludge 214. As also seen in FIG. 5, particles 504 include metallic iron particles 504A and nonmetallic-iron particles 504B.

Again referring back to FIGS. 2A and 3, at step 320 the now-cleaned particles in slurry 222 are separated into two groups, the metallic iron particles (e.g., particles 504A in FIG. 5) and all other particles, i.e., nonmetallic-iron particles (e.g., particles 504B in FIG. 5), in order to concentrate the metallic iron particles. In the embodiment of converter sludge processing system 200 shown in FIG. 2A, this separation is achieved using a two-stage separator 226 having first and second spiral stages 226A, 226B in series with one another. The metallic iron particles are typically heavier than the nonmetallic-iron particles, and separator 226 separates the differing particles based on their weight in a gravity separation process. In this example, first stage spiral 226A is a high-grade (HG) series spiral available from Downer EDi Mining, Carrara, Australia. First stage spiral 226A separates slurry 222 into a primary concentrate 228 and a primary waste 230. It is noted that the 30%-solids composition of slurry 222 was selected in this example because of the particular HG spiral 226A used. Here, an HG11 spiral was used, and this spiral is most effective with solids percentages in a range of about 27% to about 33%. With other spiral and other types of separators the solids content of slurry 222 can be outside this range as needed.

Primary concentrate 228 contains the heavier particles from slurry 222, which are largely the desired metallic iron particles. Primary concentrate 228 is sent off for further processing, as described below. Primary waste 230 contains lighter particles, some of which are metallic iron particles. Primary waste 230 is sent to second spiral stage'226B in order to retrieve at least some of these smaller metallic iron particles. In this embodiment, second spiral stage 226B is a medium-grade (MG) series spiral available from Downer EDi Mining and separates primary waste 230 into a secondary concentrate 232 and a secondary waste 234. The particles in secondary concentrate 232 are largely only metallic iron particles, whereas the particles in secondary waste are largely only nonmetallic-iron particles. As with primary concentrate 228, secondary concentrate 232 is sent off for further processing, as described below. Secondary waste 234 is sent to a settling tank 236. After settling, these particles 238, which include calcium carbonate and silicon dioxide particles, are collected and dried and can be used, for example, in cement..

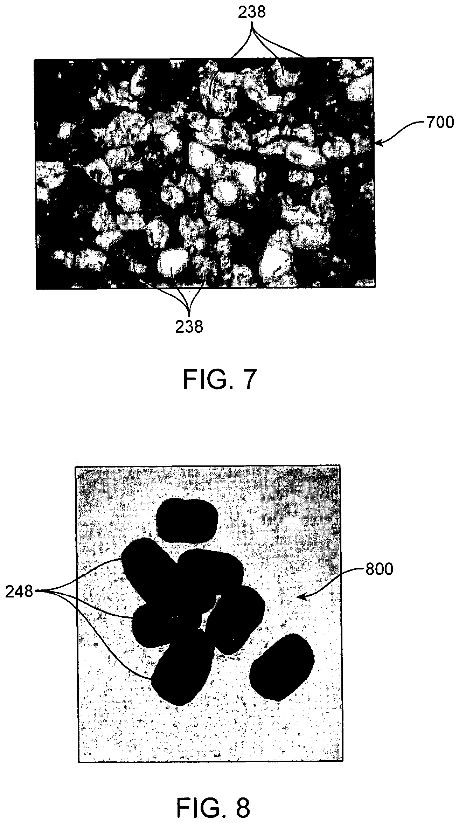

At the end of processing by separator 226, the combination of primary and secondary concentrates 228, 232 contains the metallic iron particles in relatively high concentration, typically at least 80%. FIG. 6 shows a dried sample 600 of particles 604 contained in the combination of primary and secondary concentrates 228, 232. As seen in FIG. 6, virtually all of particles 604 are metallic iron particles. In contrast, FIG. 7 shows a dried sample 700 of particles 238 that were in secondary waste 234 discarded to settling tank 236 after processing by separator 226. FIG. 7 clearly shows that substantially all of particles 238 are nonmetallic-iron particles. Although a Humphrey's-type spiral separator 226 is used here, those skilled in the art will readily understand that the separation at step 320 can be achieved in any of a variety of other ways, such as by using a cyclone separator, a concentration table, a jig separator, and an electromagnet separator etc.

Referring back to FIGS. 2A and 3, at step 325 primary and secondary concentrates 228, 232, which contain a high concentration of metallic particles, are dewatered. In the embodiment shown, dewatering is achieved using a dewatering screw conveyor 240, although in other embodiments dewatering can be performed in other manners, such as using a dewatering cyclone, etc. The outputs of dewatering screw conveyor 240 are the particles 242 from primary and secondary concentrates 228, 232, which, again, are largely only metallic iron particles, and the mixture 244 of water and very fine particles from the two concentrates. In the embodiment shown, mixture 244 is sent to settling tank 236, and the water is reused in other parts of system 200, such as in condition/slurry pump 220, wherein it is used to create 30%-solids slurry 222 as described above. The flow of particles 242 output from dewatering screw conveyor 240 has a moisture content of about 20%. At step 330, particles 242 are dried in a suitable dryer 246. In one example, dryer 246 heats particles to about 200°C to drive the water out/off of the particles.

All of the pieces of equipment that contribute to the separation/isolation of the metallic iron particles originally in converter sludge 210 can be considered, collectively, as "separating equipment" since they participate in the separation/isolation process. In exemplary converter sludge processing system 200, such separating equipment includes not only acoustic cavitation device 224, which removes fines from the particles in slurry 222, and separator 226, which concentrates the metallic iron particles in slurry 222, but also classifying screw conveyor 216, conditioner/pump 220, dewatering screw conveyor 240, and dryer 246, all of which contribute to the overall separating/isolating process.

At step 335, the now-dried particles 242 are formed into cohesive bodies, here cohesive briquettes 248, that can be handled and stored without losing their cohesiveness. In the embodiment of converter sludge processing system 200 illustrated, step 335 has two primary sub-steps 335A, 335B due to the type of equipment used. At sub-step 335A, particles 242 are formed into loosely bound briquettes 250 using a high-pressure former 252. In this embodiment, former 252 is a briquette press. As one example, former 252 can be 220-metric-ton briquette press model B220B available from K.R. Komarek, Wood Dale, Illinois. Because particles are largely only metallic iron particles (typically microspheres) and no binder is used, loosely bound briquettes 250 have very low mechanical resistance and, therefore, generally cannot be handled without losing their initial integrity.

Consequently, at sub-step 335B, loosely bound briquettes 250 are heat-treated in a heat treatment device 254 so as to transform the loosely bound briquettes into cohesive briquettes 248 that remain largely intact during normal handling and storage, if any. In one example, at sub-step 335B loosely bound briquettes 250 are heated to a temperature sufficiently high, typically greater than about 700°C, for a time long enough to transform them into cohesive briquettes 248 having mechanical resistance and hardness that makes it possible to handle and store them without causing them to substantially lose their original shape. In one embodiment, heat treatment device 254 is a continuous-feed furnace that complements the rest of converter sludge processing system 200, in which the primary components are continuous-feed components. In one example, heat treatment device 254 is an 8-meter-long furnace that provides a 25-minute residence time and heats loosely bound briquettes 250 at a temperature of about 850°C to about 900°C. Under these conditions, thermal migration amongst the atoms of the interfaces of particles 242 within loosely bound briquettes 250 is promoted to a point that the particles become cohesively bound together and form cohesive briquettes 248. Energy usage can be minimized by heating loosely bound briquettes 250 only enough to enable this cohesive bonding. Of course, the particles can be heated until fusion occurs, but this requires more energy. All of the pieces of equipment that contribute to the forming of cohesive briquettes 248 can be considered, collectively, as "forming equipment." In exemplary converter sludge processing system 200, such forming equipment includes high-pressure former 252 and thermal treatment device 254.

Cohesive briquettes 248 generally do not lose their cohesiveness until reaching their fusion point. FIG. 8 shows a set 800 of actual cohesive briquettes 248 made using converter sludge processing system 200, which includes the K.R. Komarek B220B briquetting press mentioned above, which produces, for example, briquettes that are 3cm x 2.5cm x 1.5cm in size. Once cohesive briquettes 248 have been created, they can be used as desired. For example, as mentioned above cohesive briquettes can be used as charge material for a basic oxygen converter or an electric arc furnace.

As mentioned above, exemplary converter sludge processing system 200 is designed and configured so that the steps of method 300 are performed with a continuous flow through the system. That is, all primary pieces of equipment selected for this system do not process batches; rather, they process in continuous flows. For example, the example used for heat-treatment device 254 is a furnace in which loosely bound briquettes 250 are heated as they progress along the length of the furnace. As other examples, Atkins-type screw conveyor 216, Humphrey's-type spiral separator 226, and dewatering screw conveyor 240 all operate in continuous processing modes. That said, those skilled in the art will appreciate that in alternative embodiments, any one of the disclosed pieces of continuous processing mode equipment can be replaced by corresponding batch processing equipment.

In addition, those skilled in the art will readily appreciate that depending on the nature of the equipment used, two or more pieces of equipment in converter sludge processing system 200 of FIG. 2A can be replaced by a single piece of equipment that achieves the same end result as the pieces of equipment being replaced. For example, in system 200, step 335 of forming cohesive bodies of the metallic iron particles is performed using high-pressure former 252 and heat treatment device 254. However, a single piece of equipment designed and configured to heat the particles during pressure forming can replace two separate devices 252, 254. Those skilled in the art will understand where such replacements can be made.

An important component of exemplary converter sludge processing system 200 is acoustic cavitation device 224 because of the role it plays in the removals of the binder fines from the larger particles slurry 222 that allow for the production of such high purity metallic iron briquettes 248. Like other components of system 200 mentioned above, acoustic cavitation device 224 is designed and configured to process a continuous flow of slurry 222 as it flows through the device. In order to achieve this, acoustic cavitation device 224 has a unique design that is more particularly shown in FIGS. 9-11.

Referring now to FIG. 9, the exemplary acoustic cavitation device 224 shown is designed and configured to process an about 15%-solids slurry to an about 50%-solids slurry composed of thick converter sludge and water at the rate of 10 m³/hour. In the particular example of FIG. 2A, the percentage of solids in slurry 222 is about 30%. This should be kept in mind when reading the following description of device 224 to understand that other embodiments can have different configurations, dimensions, etc., especially when designed for other processing rates.

Acoustic cavitation device 224 includes an acoustic cavitation duct 900, an inlet 904, and an outlet 908, and, when installed, the duct is oriented vertically with the inlet at the lower end and the outlet at the upper end. It is noted that it is preferred, but not absolutely necessary, that duct 900 be oriented vertically or inclined, rather than horizontally, since a horizontal orientation could cause precipitation of solids within the duct. Having inlet 904 at the lower end also helps in controlling the time that slurry 222 (FIG. 2A) is exposed to the acoustic cavitation cleaning action. In this example, acoustic cavitation duct 900 is 5 meters long in the direction of flow between inlet 904 and outlet 908, and is made up of five identical 1-meter-long segments 900A-E secured to each other via flanged and bolted connections 912A-D. Inlet 904 and outlet 908 are similarly secured to acoustic cavitation duct 900 via flanged and bolted connections 916A-B. As seen best in FIGS. 10 and 11, acoustic cavitation duct 900 defines an internal passageway 1000 having a rectangular transverse cross-sectional shape of approximately 70 mm x 32 mm in size.

As seen in FIG. 10, each acoustic cavitation duct segment 900A-E includes eleven ultrasonic transducers spaced evenly along that segment, with six transducers 1004A-F on one side of that segment and five transducers 1008A-E on the other side. Transducers 1004A-F, 1008A-E provide acoustic emissions of compression and decompression waves that promote cavitation within slurry 222 (FIG. 2A) as it flows continuously through duct 900. This action not only cleans binder fines and other surficial matter from the particles in slurry 222, but it also renders unnecessary conventional static residence times and conventional agitators.

In this example, ultrasonic transducers 1004A-F, 1008A-E are each piezoelectric transducers, with transducers 1004A-F being 50 W, 25 kHz transducers and transducers 1008A-E being 50 W, 40 kHz transducers. Thus, entire acoustic cavitation duct 900 made up of the five like segments 900A-E has a total of 55 ultrasonic transducers 1004A-F, 1008A-E, with 30 of the transducers being 50 W, 25 kHz transducers and 25 of the transducers being 50 W, 40 kHz transducers. Transducers 1004A-F, 1008A-E are powered in groups of five by eleven 250 W power supplies 920A-K.

Referring to FIGS. 2A and 9, acoustic cavitation device 224 generally works as follows. When slurry 222 enters inlet 904, fines are bound to the metallic and nonmetallic materials that largely form thick converter sludge 214. As slurry 222 is exposed to acoustic cavitation duct 900, the metallic iron particles (see particles 504A of FIG. 5), which are typically spherical in shape, start to vibrate at a frequency that is determined by the ultrasound generated by transducers 1004A-F, 1008A-E (FIG. 10). The frequency at which the metallic iron particles vibrate is different from (higher than) the frequency at which the nonmetallic material vibrates, and this promotes the removal of the fines from the metallic iron particles. In the present example, two different ultrasound frequencies are used to produce a uniform sound field of intense ultrasonic cavitation within slurry 222, which maximizes the reaction kinetics within the linear space allotted within acoustic cavitation duct 900. The sound energy produces drastic process rate changes and quality enhancements down to the molecular level.

Those skilled in the art will readily appreciate that acoustic cavitation device 224 shown is merely one example, and that many other configurations are possible. Design considerations for designing a continuous-flow acoustic cavitation device include the composition of the slurry at issue, the flow rate of the slurry, the applied power of the ultrasound, the residence time of the slurry in the acoustic cavitation duct, and the processing rate required, among others. It appears that the power should be greater than 7W/s and that the residence time should be at least about 2.5 seconds for most commercial applications. Alternative configurations of the acoustic cavitation device can have passageways that differ in size, transverse cross-sectional shape, length, straightness, etc. Alternative configurations can also have different numbers of transducers and different transducer locations and arrangement. Those skilled in the art will be able to design, make, and use acoustic cavitation devices that provide the desired/necessary cleaning function without undue experimentation.

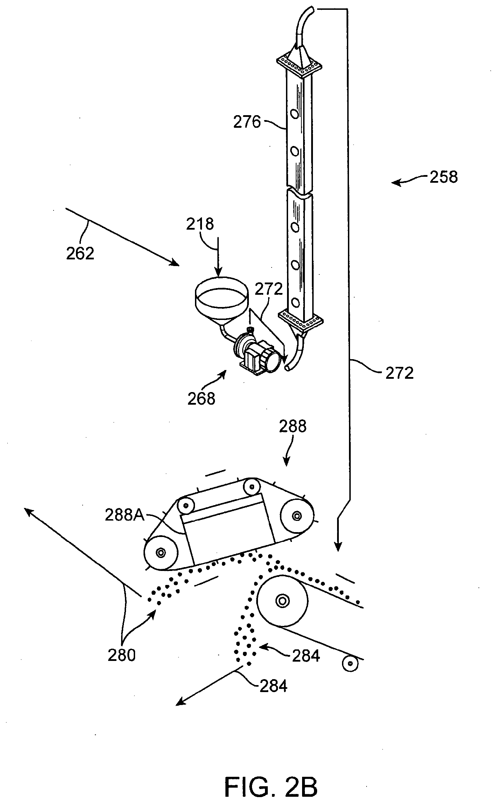

Whereas FIGS. 2A and 3 are directed to inputting thick sludge 214 (FIG. 2A) into conditioner/slurry pump 220 (see also step 310 of method 300 of FIG. 3), FIG. 2B illustrates a system 258 that is particular adapted for processing an input residue 262 containing relatively fine iron-oxide containing particles as compared to thick sludge 214 of FIG. 2A. Examples of input residue 262 of FIG. 2B include thin sludge, such as could be taken from the screw conveyor 216 of FIG. 2A as the part of sludge 210 that does not make it to the top of the conveyor as thick sludge, and dust from an electrostatic precipitator (not shown) that would take the place of scrubbing system 202 in FIG. 2A.

As seen in FIG. 2B, residue 262, be it thin sludge, electrostatic precipitator dust, etc., is mixed with water, here in a conditioner/slurry pump 268 to create a slurry 272 and pump the slurry to the next stage of system 258. In one example, water 218 is added to residue 262 so that slurry 272 is about 30% solids. Generally, a suitable slurry will have a solids percentage in a range of about 20% to about 50%. In this embodiment, conditioner/slurry pump 268 is designed and configured to produce and pump slurry 272 having 30% solids (70% water) at a rate of 0.1 m³/min.

Conditioner/slurry pump 268 pumps slurry 272 to a disaggregating apparatus 276 that largely disaggregates iron-oxide-containing particles from particles that do not contain iron oxide. In this example, apparatus 276 is a vertically oriented acoustic cavitation device in which the particles are disaggregated as slurry 272 flows upward through the device in a continuous stream. Further details of an exemplary acoustic cavitation device 224 that can be used as disaggregating apparatus 276 are described above in connection with FIGS. 9-11. In other embodiments, another disaggregating apparatus can be used for apparatus 276.

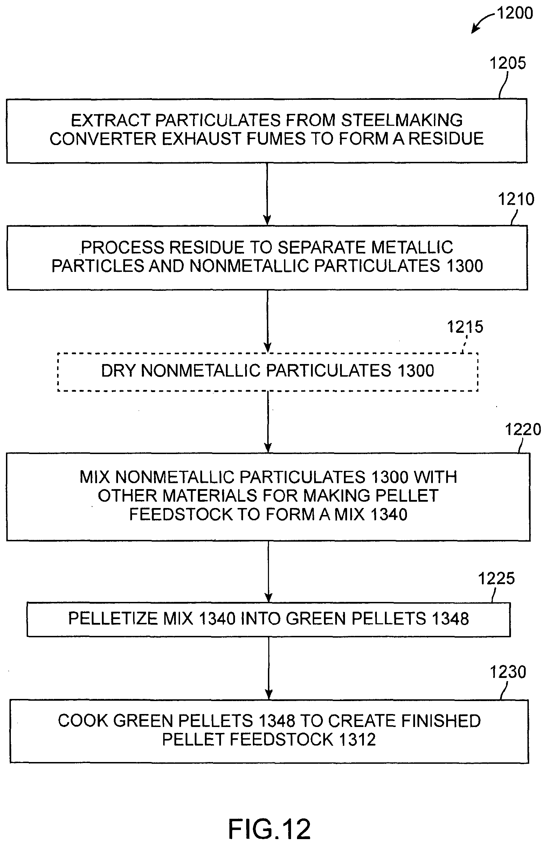

Still referring to FIG. 2B, the now-disaggregated particles in slurry 272 are separated into two groups, metallic particles 280 and nonmetallic particulates 284, which contain a relatively large amount of iron oxide. In the embodiment of system 258 shown in FIG. 2B, this separation is achieved using a magnetic separator 288 having a magnet 288A that attracts metallic particles 280, though the separating can be accomplished using other devices known in the art. If desired, the now separated metallic particles 280 can be processed in the manner of particles 242 of FIG. 2A into cohesive briquettes similar to briquettes 248 of FIG. 2A using techniques described above. The now separated nonmetallic particulates 284 of FIG. 2B can be used in making either pellet or sinter feedstock, or both, for example in the manners described below in connection with FIGS. 12 to 16.

FIG. 12 illustrates a method 1200 of making pellet feedstock in accordance with various aspects of the present invention. At step 1205, particulates are extracted from exhaust fumes of a steelmaking converter process to form a residue. As mentioned above, the residue can be, for example, sludge resulting from a fume-quenching process or dust from an electrostatic precipitation process, among others. At step 1210, the residue is processed to separate metallic particles and nonmetallic particulates from one another. In one example, this is done using the acoustic-duct disaggregation techniques depicted and described relative to FIG. 2B, above.

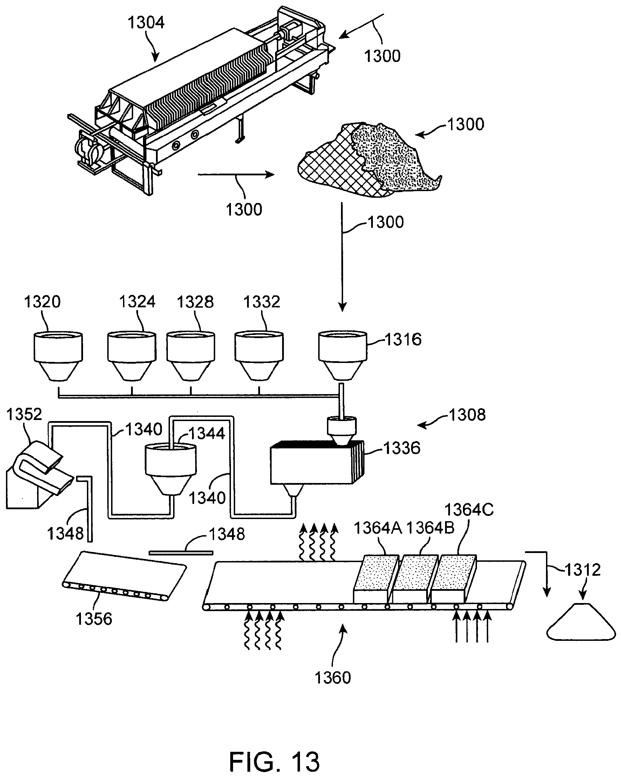

Referring now not only to FIG. 12 but also to FIG. 13 for visualizations of the rest of method 1200, if the now-separated, substantially nonmetallic particulates, represented at element numeral 1300 in FIG. 13 (these particulates can be particulates 284 of FIG. 2B), are wet following separation at step 1210, at optional step 1215 the nonmetallic particulates can be dried, for example, until they reach about 4% to about 1% moisture content. In one example, optional step 1215 can be performed by non-heating-type drier 1304, such as a press-filter or an Outotec vacuum-belt filter (formerly Larox), available from Outotec Oyj, Espoo, Finland. Non-heat drying tends to maintain the hygroscopicity of particulates 1300, which is a desirable characteristic for using the particulates as a binder in a pelletization system, such as system 1308 of FIG. 13, for creating pellet feedstock 1312 for making pig iron.

At step 1220, nonmetallic particulates 1300, now represented by feed bin 1316, is mixed with one or more other materials that will be used to create pellet feedstock 1312. In this example, those other materials include iron ore (represented by feed bin 1320), limestone (represented by feed bin 1324), bentonite (represented by feed bin 1328), and, if needed, coal (represented by feed bin 1332). All of the materials in feed bins 1316, 1320, 1324, 1328, and 1332 are combined with one another according to a specific mix determined by the inputs used to produce pellet feedstock 1312. Except for particulates 1300 extracted from the exhaust fume residue, those skilled in the art will know how to determine mix ratios depending on the types and character of the mix materials, as well as the chemistry of the converter charge and other materials added to the blast furnace used to make the pig iron. For example, bentonite, represented by feed bin 1328, is often added in a range of about 4 kg to about 25 kg per metric ton of produced pellet feedstock 1312. Particulates 1300 are added in a suitable amount, such as about 4 kg/metric ton of pellet feedstock to about 18 kg/metric ton of pellet feedstock. The materials from feed bins 1316, 1320, 1324, 1328, and 1332 can be mixed in any suitable manner, such as by using a rotary mixer 1336 or other mixing device, so as to produce a mix 1340 that is the precursor to pellet feedstock 1312. In FIG. 13, mix 1340 is shown as being temporarily stored in a storage bin 1344, but this need not be so in other pellet forming systems that fall within the scope of the present disclosure.

At step 1225, mix 1340 is processed into suitably sized green pellets 1348 (i.e., pellets that have not yet been heat treated). In pellet forming system 1308 of FIG. 13, this processing is achieved by a rotating-drum-type pelletizer 1352 and a belt-type sieve 1356 that selects the properly sized pellets output by the pelletizer. Of course, other types of equipment can be used to create properly sized green pellets 1348. Further description of the equipment used to form suitably sized green pellets 1348 is not necessary, since such equipment is known in the art for producing conventional pellet feedstock for making pig iron.

At step 1230, green pellets 1348 are cooked and cooled to create finished pellet feedstock 1312. In the example shown in FIG. 13, green pellets 1348 are cooked by a conventional pellet-feedstock furnace system 1360 that uses pellet cars 1364, here three pellet cars 1364A, 1364B, and 1364C are shown, to carry the initially green pellets 1348 into the furnace. Each pellet car 1364 is made of a high-temperature-resistance material that allows initially green pellets 1348 to reach about 1,250° C to allow them to be cooked. The cooking process causes the initially green pellets 1348 to become coherent pellet feedstock 1312 that is relatively very resistant to mechanical damage. Following cooking, pellet feedstock 1312 are cooled, sieved as necessary to select the proper size of pellets, and stored, in any order. The addition of largely nonmetallic particulates 1300 (FIG. 13) recovered from converter exhaust fume residue into pellet feedstock 1312 is similar to the addition of bentonite in conventional pelletization in that both materials are hygroscopic. However, an important difference is that nonmetallic particulates 1300 contain iron oxide, which raises the total iron content of pellet feedstock 1312 relative to conventional pellet feedstock. In one example, the total iron content of pellet feedstock 1312 is about 0.8% by weight, whereas the total iron content of conventional pellet feedstock is about 0.3% by weight. In addition, pellet feedstock 1312 has relatively low amounts of silicon and alumina compared to conventional pellet feedstock because of the reduction in bentonite. Essentially, the amounts of silicon and alumina in pellet feedstock 1312 is due to residuals in nonmetallic particulates 1300.

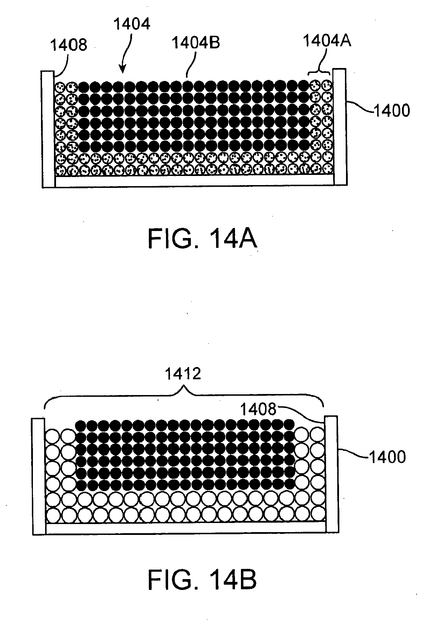

When a pellet-car-based cooking technique is used for cooking green pellets 1348, unique properties of the green pellets resulting from the incorporation of nonmetallic particulates 1300 allow for much higher cooking efficiencies and cooking throughput when compared to conventional green pellets that do not contain nonmetallic particulates from converter exhaust fume residue. To illustrate, FIG. 14A illustrates a pellet car 1400, which corresponds to any one of pellet cars 1364 of FIG. 13, that is filled in a conventional manner with conventional pellet feedstock 1404. The conventional manner of filling pellet car 1400 is to essentially line the interior 1408 of the pellet car with already cooked conventional pellets 1404A and then fill the remainder of the interior with conventional green pellets 1404B. This is done because conventional green pellets 1404B do not have the mechanical strength (compressive resistance) that would be required to fill entire interior 1408 of pellet car 1400. Although pellet car 1400 could be completely filled with green pellets 1404B if they had sufficient mechanical strength, their limited strength does not allow this. Consequently, the amount of green pellets 1404B that are cooked in each load is significantly reduced by the volume of already cooked pellets 1404 needed to prevent crushing and crumbling of the green pellets. Conventional cooking processes typically require 70% to 85% green pellets and 30% to 15% cooked pellets. In a process of the present invention, the amount of cooked pellets can be reduced to 0%.

In contrast, green pellets made in accordance with aspects of the present invention that include largely nonmetallic particulates recovered from converter exhaust fumes, such as green pellets 1348 of FIG. 13, have much higher mechanical strength than conventional green pellets not containing such particulate. For example, the present inventors have observed that green pellets made in accordance with the present invention have mechanical strength up to 40% greater than the strength of conventional green pellets. Indeed, this higher mechanical strength allows entire interior 1408 of pellet car 1400 to be filled entirely with green pellets 1412 containing the exhaust fume residue particulates of the present disclosure, as illustrated in FIG. 14B. Because the entire volume of pellet car 1400 is utilized for green pellets 1412, the throughput and efficiency of cooking these green pellets is much higher than cooking conventional green pellets 1404B, which, again, only occupy a portion of the volume of interior 1408 of pellet car 1400, as illustrated in FIG. 14A.

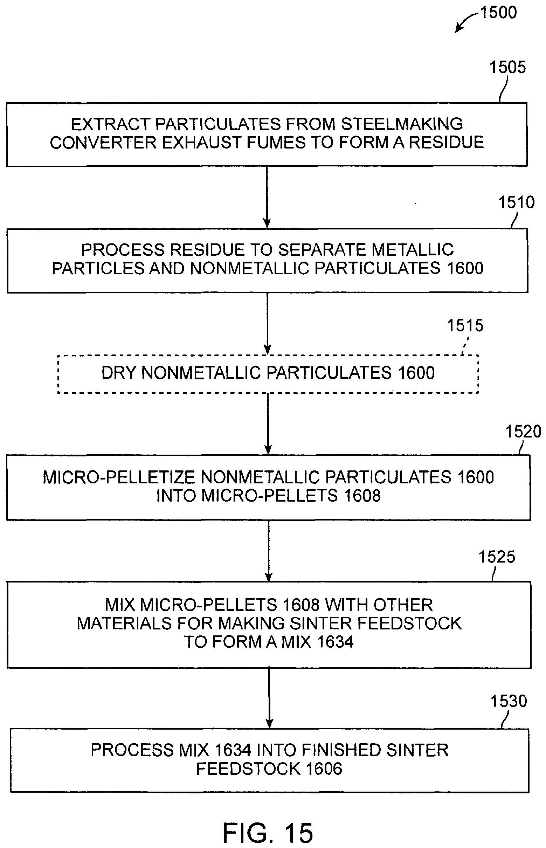

FIG. 15 illustrates a method 1500 of making sinter feedstock in accordance with various aspects of the present invention. At step 1505, particulates are extracted from exhaust fumes of a steelmaking converter process to form a residue. As mentioned above, the residue can be, for example, sludge resulting from a fume-quenching process or dust from an electrostatic precipitation process, among others. At step 1510, the residue is processed to separate metallic particulates and nonmetallic particulates from one another. In one example, this is done using the acoustic-duct disaggregation techniques depicted and described relative to FIG. 2B, above.

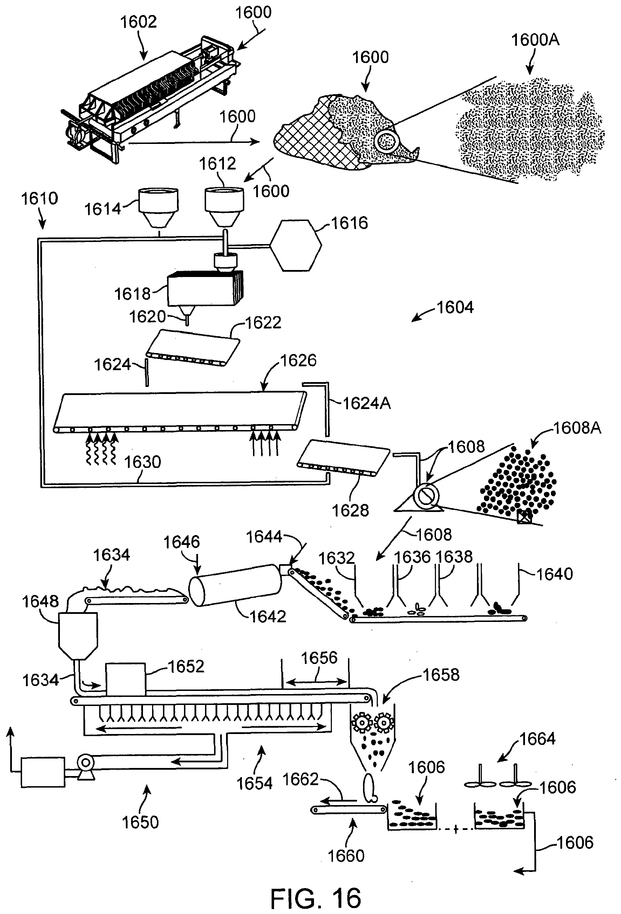

Referring now not only to FIG. 15 but also to FIG. 16 for visualizations of the rest of method 1500, if the now-separated, substantially nonmetallic particulates, represented at element numeral 1600 in FIG. 16 (these particulates can be particulates 284 of FIG. 2B), are wet following separation at step 1510, at optional step 1515 the nonmetallic particulates can be dried, for example, until they reach about 4% to about 1% moisture content. In one example, optional step 1515 can be performed by non-heating-type drier 1602, such as a press-filter or an Outotec vacuum-belt filter (formerly Larox), available from Outotec Oyj, Espoo, Finland. Non-heat drying tends to maintain the hygroscopicity of particulates 1600, which is a desirable characteristic for using the particulates as a binder in a sinter-feedstock-making system, such as system 1604 of FIG. 16, for producing sinter feedstock 1606 for making pig iron.

Nonmetallic particulates 1600 have all of the chemical properties of a sinter feed, but since it results from a process that separates the iron oxide, limestone, and other components by size, it is typically a very fine material, as depicted at element numeral 1600A in FIG. 16. Typically the size of the material is lower than 325 mesh. When nonmetallic particulates 1600 are considered too fine for effective processing into sinter feedstock 1606, at step 1520 the particulates are processed into suitably sized micro-pellets 1608, for example using micro-pelletizing equipment 1610. In one example, "suitably sized" means a size that is larger than a 60 mesh, i.e., larger than about 0.25 mm.

In one embodiment of micro-pelletizing equipment 1610, nonmetallic particulates 1600 are put into a feed bin 1612. Then, nonmetallic particulates 1600 are mixed with a binder (represented by feed bin 1614) and water (represented by tank 1616) in suitable amounts using a mixer 1618. As those skilled in the art will readily appreciate, the amounts of binder 1614 and water 1616 mixed with nonmetallic particulates 1600 will vary depending on the type of binder used, as well as the particular character and chemistry of the particulates. Binder 1614 can be any suitable organic or inorganic binder or a combination thereof. In a specific example, binder 1614 is a pre-gelatinized corn flour. When such corn flour is used as binder 1614, it can be mixed with nonmetallic particulates 1600 in a proportion in a range of about 2% to about 12% of the total mixture by weight. In this example, water 1616 can be added to the mixture of particulates 1600 and corn flour in a proportion of about 28% to about 42% of the total mixture 1620 by weight.

Mixture 1620 is then sent to an extruder 1622 that produces green micro-pellets 1624, which are then heated at a temperature in a range of about 80°C to about 250°C to cook them and give them a relatively high mechanical strength. This heating can be performed, for example, using a hot plate (not shown), hot belt 1626, or low-rotation furnace (not shown), among other things. The cooked micro-pellets 1624A are then sieved, for example using a belt sieve 1628, to separate out particles that do not meet the established size criteria. In the foregoing example, particulates in cooked micro-pellets 1624A smaller than 60-mesh are removed. In this embodiment, these unacceptably small particles are recycled and again combined into mixture 1620, as illustrated by recycling line 1630. In other embodiments, the unacceptably small particles can be discarded or used elsewhere. The acceptably sized cooked micro-pellets 1624A are micro-pellets 1608. The relatively much larger size of micro-pellets 1608 can be seen by comparing the relative sizes of the micro-pellets represented at numeral 1608A with the starting nonmetallic particulates 1600 represented at numeral 1600A. This relatively larger size of micro-particles 1608 means that particulates 1600 can be used without impacting the air permeability of the sintering process (described below) as would happen if the very small sized particulates 1600 were used without micro-pelletization. Consequently, the productivity of the sintering plant will not decrease relative to producing sinter feed using conventional materials.

At step 1525, micro-pellets 1608, now represented as feed bin 1632, is mixed with one or more other materials to produce a mix 1634 that will be used to create sinter feedstock 1606. In this example, those other materials include iron ore (represented by feed bin 1636), limestone (represented by feed bin 1638), and coal (represented by feed bin 1640). All of the materials in feed bins 1632, 1636, 1638, and 1640 are combined with one another according to a specific mix determined by the inputs used to produce sinter feedstock 1606. Except for micro-pellets 1608 made from particulates 1600 extracted from the exhaust fume residue, those skilled in the art will know how to determine mix ratios depending on the types and character of the mix materials, as well as the chemistry of the converter charge and other materials added to the blast furnace used to make the pig iron. Mixing of materials 1632, 1636, 1638, and 1640 is performed using a mixer, here a rotary mixer 1642, after the materials have been pre-watered at a watering station 1644. In this example, mix 1634 is watered again at watering station 1646 and sent to a storage/feed bin 1648.

At step 1530, mix 1634 is processed into finished sinter feedstock 1606. In the example shown in FIG. 16, mixed material 1634 is cooked by a conventional sinter-feedstock furnace system 1650 that uses sinter cars, here a single sinter car 1652 is shown, to carry the wet mixed material 1634 into a furnace 1654. Each sinter car 1652 is made of a high-temperature-resistance material that allows initially wet mixed material 1634 to reach from about 800° C to about 1,200° C to allow the material to be cooked. The cooking process causes the initially wet mixed material 1634 to become a largely monolithic body 1656. Following cooking, monolithic body 1656 is crushed by a suitable crusher 1658 and filtered by a suitable device 1660 to remove any fines 1662 unwanted in the final sinter feedstock 1606. Any removed fines 1662 removed by filtering and/or any fines collected in furnace 1654 can be recycled back to micro-pelletizing equipment 1610. Optionally, after filtering, sinter feedstock 1606 can be cooled, for example, by cooling fans 1664 and either stored or sent directly to a pig-iron-making process.

Exemplary embodiments have been disclosed above and illustrated in the accompanying drawings. It will be understood by those skilled in the art that various changes, omissions and additions may be made to that which is specifically disclosed herein without departing from the spirit and scope of the present invention.

The application further discloses the following clauses:
Clause 1: A system for processing sludge from a fume scrubbing system that scrubs fumes from a steelmaking converter, wherein the sludge includes metallic iron particles and non-metallic-iron material, the system comprising:
   separating equipment designed and configured to process the sludge so as to isolate substantially only metallic iron particles from the non-metallic-iron material; and
   forming equipment designed and configured to receive the metallic iron particles isolated by said separating equipment and form therewith cohesive bodies consisting essentially of the metallic iron particles isolated by said separating equipment.
Clause 2: A system according to clause 1, wherein said separating equipment includes an ultrasonic cleaner designed and configured to remove surficial fines bound to the metallic iron particles in the sludge.
Clause 3: A system according to clause 2, wherein said ultrasonic cleaner includes an acoustic cavitation device designed and configured to process a slurry made from the sludge in a continuous flow.
Clause 4: A system according to clause 3, wherein said acoustic cavitation device includes an acoustic cavitation duct defining an elongate fluid passageway having a flow axis, said acoustic cavitation device further comprising a plurality of ultrasonic transducers in acoustic communication with said elongate fluid passageway and spaced apart along said acoustic cavitation duct.
Clause 5: A system according to clause 2, wherein said separating equipment further comprises a sludge conditioner designed and configured to make a slurry from the sludge for use in the ultrasonic cleaner.
Clause 6: A system according to clause 2, wherein the non-metallic-iron material includes non-metallic-iron particles and said separating equipment further comprises a separator downstream of said ultrasonic cleaner designed and configured to separate the metallic iron particles from the non-metallic-iron particles.
Clause 7: A system according to clause 6, wherein said separator comprises at least one gravity-separation spiral
Clause 8: A system according to clause 6, wherein said forming equipment includes a pressure former designed and configured to form the metallic iron particles into loosely bound bodies.
Clause 9: A system according to clause 8, wherein said pressure former is a high-pressure briquette former that applies at least 30 metric tons to each briquette formed thereby.
Clause 10: A system according to clause 8, wherein said forming equipment further includes a heat-treatment device for converting the loosely bound bodies into the cohesive bodies.
Clause 11: A system according to clause 6, wherein said forming equipment includes a pressure former designed and configured to form the metallic iron particles into loosely bound bodies.
Clause 12: A system according to clause 8, wherein said pressure former is a high-pressure briquette former that applies at least 30 metric tons to each briquette formed thereby.
Clause 13: A system according to clause 8, wherein said forming equipment further includes a heat-treatment device for converting the loosely bound bodies into the cohesive bodies.
Clause 14: A system for processing sludge from a fume scrubbing system that scrubs fumes from a steelmaking converter, wherein the sludge includes metallic iron particles, non-metallic-iron particles, and fines adhered to the metallic iron particles and the non-metallic-iron particles, the system comprising:
   a conditioner designed and configured to add water to the sludge to create a slurry;
   an acoustical cleaner designed and configured to receive the slurry and remove the fines from the metallic iron particles and the non-metallic-iron particles present in the slurry;
   a separator designed and configured to separate the metallic iron particles from the non-metallic-iron particles cleaned in said acoustical cleaner;
   a briquette former designed and configured to make briquettes consisting essentially only of the metallic iron particles separated in said separator; and
   a heat-treatment device designed and configured to stabilize the briquettes for handling.
Clause 15: A body, consisting essentially of:
   metallic iron particles isolated from steel converter sludge;
   wherein said metallic iron particles are cohesively agglomerated into a unified mass as a result of thermal treatment of the body.
Clause 16: A body according to clause 15, wherein said metallic iron particles are cohesively agglomerated but not fused together.
Clause 17: An apparatus for cleaning particles in a slurry in a continuous-flow process, the cleaning tool comprising:
   an inlet designed and configured to receive the slurry in a continuous flow;
   an outlet designed and configured to output the slurry in the continuous flow; and
   an acoustic cavitation duct extending between said inlet and said outlet so as to carry the slurry in the continuous flow, wherein said acoustic cavitation duct defines a fluid passageway having a flow axis and is designed and configured for inducing acoustic cavitation within the fluid passageway in the continuous flow of the slurry along said flow axis.
Clause 18: An apparatus according to clause 17, further comprising a plurality of ultrasonic transducers in acoustic communication with said elongate fluid passageway and spaced apart along said acoustic cavitation duct.
Clause 19: A method for making metallic iron charge material for a steel converter or an electric arc furnace, the method comprising:
   receiving steel converter fume sludge;
   isolating metallic iron particles present in the steel converter fume sludge; and
   forming a cohesive body consisting essentially only of the metallic iron particles isolated from the steel converter fume sludge.
Clause 20: A method according to clause 19, wherein said isolating the metallic iron particles includes cleaning particles in the steel converter fume sludge using ultrasound.
Clause 21: A method according to clause 20, wherein said cleaning particles in the steel converter fume sludge using ultrasound includes inducing acoustic cavitations into the basic oxygen converter fume sludge.
Clause 22: A method according to clause 19, wherein said forming the cohesive body includes pressure forming the metallic iron particles into a loosely bound body.
Clause 23: A method according to clause 22, wherein said forming the cohesive body further includes heat treating the loosely bound body to create the cohesive body.
Clause 24: A method according to clause 23, wherein said heat treating the loosely bound body includes heating the loosely bound body to a point below which the metallic particles fuse with one another.
Clause 25: A method of making steel, comprising:
   receiving basic oxygen converter fume sludge;
   isolating metallic iron particles present in the basic oxygen converter fume sludge;
   collecting the isolated metallic iron particles; and
   adding the collected iron particles as charge material to a basic oxygen converter or an electric-arc furnace.
Clause 26: A method according to clause 25, wherein said collecting the isolated metallic iron particles includes forming a cohesive body consisting essentially only of the metallic iron particles isolated from the basic oxygen converter fume sludge, and said adding the collected iron particles as charge material includes adding the cohesive body to the basic oxygen converter or the electric-arc furnace.
Clause 27: A method according to clause 26, wherein said forming the cohesive body includes pressure forming the metallic iron particles into a loosely bound body.
Clause 28: A method according to clause 27, wherein said forming the cohesive body further includes heat treating the loosely bound body to create the cohesive body.
Clause 29: A method according to clause 28, wherein said heat treating the loosely bound body includes heating the loosely bound body to a point below which the metallic particles fuse with one another.
Clause 30: A method according to clause 25, wherein said isolating the metallic iron particles includes cleaning particles in the basic oxygen converter fume sludge using ultrasound.
Clause 31: A method according to clause 30, wherein said cleaning particles in the basic oxygen converter fume sludge using ultrasound includes inducing acoustic cavitations into the basic oxygen converter fume sludge.
Clause 32: A method of making feedstock particles for making pig iron, comprising:
   obtaining nonmetallic particulates separated from steel converter fume residue;
   processing the nonmetallic particulates into a feedstock mixture, including adding a binder and adding one or more additional materials;
   processing the feedstock mixture into the feedstock particles, including cooking the feedstock mixture.
Clause 33: A method according to clause 32, wherein said obtaining nonmetallic particulates includes obtaining the nonmetallic particulates from a separation process that uses an acoustic cavitation duct to disaggregate the nonmetallic particulates from metallic particulate in the steel converter fume residue.
Clause 34: A method according to clause 32, wherein said adding the binder includes adding an inorganic binder.
Clause 35: A method according to clause 34, wherein said adding the inorganic binder includes adding bentonite.
Clause 36: A method according to clause 32, wherein said adding the binder includes adding an organic binder.
Clause 37: A method according to clause 36, wherein said adding the organic binder includes adding pre-gelatinized corn flour.
Clause 38: A method according to clause 32, wherein said adding one or more additional materials includes adding iron ore.
Clause 39: A method according to clause 38, wherein said adding one or more additional materials includes adding limestone.
Clause 40: A method according to clause 39, wherein said adding one or more additional materials includes adding coal.
Clause 41: A method according to clause 32, wherein said processing the nonmetallic particulates into the feedstock mixture includes, prior to said adding the one or more other materials, pelletizing the nonmetallic particulates into micro-pellets.
Clause 42: A method according to clause 41, wherein said pelletizing includes mixing the nonmetallic particulates with the binder to provide a mixture.
Clause 43: A method according to clause 42, wherein said pelletizing further includes forming the mixture into micropellets.
Clause 44: A method according to clause 43, wherein said pelletizing further includes cooking the micropellets.
Clause 45: A method according to clause 32, wherein the feedstock is a sinter feedstock and said processing the feedstock mixture includes processing the feedstock mixture into the sinter feedstock. Clause 46: A method according to clause 45, wherein said processing the feedstock mixture includes:
   cooking the feedstock mixture to create a unified body of cooked feedstock mixture; and
   crushing the unified body to create the sinter feedstock.
Clause 47: A method according to clause 32, wherein the feedstock is a pellet feedstock and said processing the feedstock mixture includes processing the feedstock mixture into the pellet feedstock.
Clause 48: A method according to clause 47, wherein said processing the feedstock mixture includes:
   pelletizing the feedstock mixture into green pellets; and
   cooking the green pellets so as to create the pellet feedstock.
Clause 49: A method according to clause 48, wherein said cooking the green pellets includes:
   completely filling an empty pellet car with a load of the green pellets; and
   cooking the load to create the pellet feedstock.
Clause 50: A feedstock for a pig-iron-making process, comprising:
   a mass of particles each containing the following materials:
      iron ore; and
      nonmetallic particulates separated from steel converter fume residue;
   wherein the materials in the mass of particles are present in said mass in predetermined proportions.
Clause 51: A feedstock according to clause 50, wherein the nonmetallic particulates are nonmetallic particulates from a separation process that uses an acoustic cavitation duct to disaggregate the nonmetallic particulates from metallic particulate in the steel converter fume residue.
Clause 52: A feedstock according to clause 50, wherein said mass of particles comprises a mass of pellets, and said nonmetallic particulates function as a binder in said mass of pellets.
Clause 53: A feedstock according to clause 50, wherein said mass of particles comprises a mass of material crushed from a precursor body.
Clause 54: A feedstock according to clause 50, wherein each particle of said mass further contains limestone.
Clause 55: A feedstock according to clause 54, wherein each particle of said mass further contains coal.
Clause 56: A feedstock according to clause 50, wherein said mass of particles comprises nonmetallic micro-pellets containing said nonmetallic particulates.
Clause 57: A system for processing steel converter fume residue, comprising:
   separating equipment designed and configured to:
      receive the residue; and
      process the residue so as to separate the steel converter fume residue into metallic particulates and nonmetallic particulates;
   processing equipment designed and configured to:
      receive the nonmetallic particulates;
      process the nonmetallic particulates into at least one of 1) sinter feedstock for producing pig iron and 2) pellet feedstock for producing pig iron; and
      output the sinter feedstock and/or pellet feedstock.
Clause 58: A system according to clause 57, wherein said separating equipment includes an acoustic duct designed and configured to separate the metallic particulates and nonmetallic particulates using acoustical energy.
Clause 59: A system according to clause 57, wherein said processing equipment includes:
   mixing equipment designed and configured to mix the metallic particulates with a binder and one or more of 1) iron ore, 2) limestone, and 3) coal and output a mixture of the metallic particulates, the binder, and the one or more of the iron ore, the limestone, and the coal;
   pelletizing equipment designed and configured to pelletize the mixture into green pellets; and
   a cooking system designed and configured to cook the green pellets so as to create the pellet feedstock.
Clause 60: A system according to clause 57, wherein said processing equipment includes:
   micro-pelletizing equipment designed and configured to pelletize the nonmetallic particulates into micro-particles;
   mixing equipment designed and configured to mix the micro-particles with one or more of 1) iron ore, 2) limestone, and 3) coal and output a mixture of the micro-particles and the one or more of the iron ore, the limestone, and the coal;
   a cooking system designed and configured to cook the mixture so as to create a unified body; and
   a crusher designed and configured to crush the unified body into the sinter feedstock.

## Claims

1. An apparatus, comprising:
a cleaning tool for surface cleaning particles in a slurry in a continuous-flow process, wherein the slurry is configured to flow through the cleaning tool at a flow rate, said cleaning tool comprising:
an inlet designed and configured to receive the slurry in a continuous flow at the flow rate;
an outlet designed and configured to output the slurry in the continuous flow;
an acoustic cavitation duct extending between said inlet and said outlet so as to carry the slurry in the continuous flow, wherein said acoustic cavitation duct defines a fluid passageway having a flow axis and is designed and configured for inducing acoustic cavitation within the fluid passageway in the continuous flow of the slurry along said flow axis;
said acoustic cavitation duct including a plurality of ultrasonic transducers in acoustic communication with said elongate fluid passageway and spaced apart along said flow axis, said plurality of ultrasonic transducers being configured to generate two different ultrasonic frequencies.

2. An apparatus according to claim 1, wherein a first group of said plurality of ultrasonic transducers is configured to generate a first ultrasound frequency of about 25 kHz and a second group of said plurality of ultrasonic transducers is configured to generate a second ultrasound frequency of about 40 kHz.

3. An apparatus according to claim 1 or claim 2, wherein each of said plurality of ultrasonic transducers operates at a power of greater than 7 watts per second.

4. An apparatus according to any of claims 2 to 3, wherein said acoustic cavitation duct comprises a plurality of segments, wherein in one of said segments:
said first group of ultrasonic transducers are spaced evenly from one another along a first side of said segment; and
said second group of ultrasonic transducers are spaced evenly from one another along a second side of said segment.

5. An apparatus according to any of claims 1 to 4, wherein said acoustic cavitation duct defines an internal passageway having a rectangular transverse cross-sectional shape.

6. An apparatus according to any of claims 1 to 5, wherein said acoustic cavitation duct has a lower end and an upper end, said inlet being at said lower end and said outlet being at said upper end.

7. An apparatus according to claim 6, wherein said acoustic cavitation duct is substantially vertical when said cleaning tool is installed.

8. An apparatus according to any of claims 1 to 7, wherein said cleaning tool is designed and configured so that the residence time within said fluid passageway is at least 2.5 seconds.

9. An apparatus according to any of claims 1 to 8, wherein the slurry comprises steelmaking converter sludge containing metallic iron particles.

10. An apparatus according to any of claims 1 to 8, wherein said cleaning tool is designed and configured to clean particles in the slurry while the slurry is in the continuous flow.

11. An apparatus according to any of claims 1 to 10, wherein said acoustic cavitation duct is designed and configured to remove surficial fines bound to the metallic iron particles in the sludge.

12. A method comprising operating the apparatus of any of claims 1 to 10 so as to induce acoustic cavitations into the slurry.

13. A method according to claim 12, wherein the slurry includes particles and said acoustic cavitation duct is operated to clean the surfaces of the particles in the slurry.

14. A method according to claim 12, wherein the slurry includes metallic iron particles and said acoustic cavitation duct is operated to remove surficial fines bound to the metallic-iron particles in the slurry.
